# EUROPEAN PATENT SPECIFICATION

(11) **EP 4 010 676 B1**
(45) Date of publication and mention of the grant of the patent: **31.07.2024**
(21) Application number: 20757958.2
(22) Date of filing: 28.07.2020
(51) Int. Cl.: G01M 3/22

(54) **LEAK TEST MACHINE FOR VEHICLE RIM**
LECKPRÜFMASCHINE FÜR FAHRZEUGFELGE
MACHINE D'ESSAI D'ÉTANCHÉITÉ POUR JANTE DE VÉHICULE

(30) Priority: 07.08.2019 IT 201900014244
(43) Date of publication of application: 15.06.2022
(73) Proprietor: Test Industry S.r.l., 20121 Milano (IT)
(72) Inventor: SPEZZABALLI, Daniel, 20121 Milano (IT)
(74) Representative: De Lorenzo, Danilo
(86) International application number: PCT/IB2020/057091
(87) International publication number: WO 2021/024087

(56) References cited:
- JP-A- 2000 074 775
- US-A- 4 754 638
- US-A- 5 431 041
- US-A1- 2014 090 448

## Description

The present invention relates to a leak test machine for a vehicle rim, such as a rim of a wheel of a light or heavy vehicle, for example of a car or truck or agricultural vehicle.

Leak test machines are known in the art. This type of machine is used to identify very small leaks in the rim. Examples of known test machines are disclosed in documents US2014/090448A1, JP2000074775A and US4754638A.

Leaks are due, for example, to porosity in the case of cast rims (obtained by gravity, low pressure or die casting), or to welding defects in steel rims, or to poor adhesion of the layers forming a wheel made of composite material (carbon fiber or other).

To carry out the test, sealing the rim between two gaskets, a lower one and an upper one, is known, so as to obtain a so-called inner chamber. A so-called bell (or outer chamber) then closes the entire rim, thus simulating the tire. The machine then proceeds to pressurize the outer chamber, with air or with a gas mixture including a tracer gas. In the inner chamber, the increase of pressure or the increase of tracer gas concentration is measured. Thereby, with special algorithms, it is quickly determined if there is a seeping (leak) between the outer chamber and the inner chamber.

It is important that this type of machines is capable of randomly testing rims with the widest variety of different sizes and styles.

Over the years, sizes and styles have transformed the rim market. Designers have created increasingly larger rims and more and more sophisticated styles. During these evolutions, protruding styles were defined (hub protruding with respect to the upper edge) as well as styles modifying the edge itself, to such an extent that the spoke of the rim reaches over the edge. It is even possible that some sort of small grooves are obtained in the edge, i.e., partial interruptions of the edge itself.

As a result, when the upper gasket rests on the outer edge of the rim, the test machines of the background art fail, for example, because of the edge below the hub plane or because of the discontinuities encountered on the edge do not allow an adequate sealing.

The problem of the hub protruding from the rim edge has been solved in the art by virtue of the presence of a conical upper gasket. Inconveniently, when the rim is not well aligned, the conical-shaped upper gasket causes a non-uniformity of the load on the periphery of the rim edge, with a consequent poor sealing on the edge. In these cases, the machine generates so-called "false rejects" (i.e., rims which have no leaks, but which the machine defines as rejects). For these reasons, in which the use of a conical gasket is required, it is necessary to maintain a very low cone angle (narrow angles of inclination), to limit the generation of false rejects as much as possible.

However, the issue relating to the presence of rims with interrupted edges has not yet been solved. In fact, although a wider angle of the cone of the upper gasket may allow an improved sealing, this would lead to an increased generation of false rejects in the rims with a protruding hub.

For the above reasons, to date, suitably shaped annular elements in rubber are provided, which, once applied to the rim edge, give continuity to the rim edge, thus allowing tests to be carried out. Unfortunately, for each size and style of rim it is necessary to have a customized annular element. Furthermore, in addition, it is necessary to insert and remove the annular element each time the test is carried out.

Therefore, the need to propose a leak test machine for vehicle rim capable of overcoming the drawbacks of the leak test machines of the background art is felt. In particular, it is one of the objects of the present invention to provide a leak test machine for vehicle rim which is capable of testing multiple varieties of vehicle rims in a quick, reliable manner and without complicated procedures that slow down the testing operations.

Such an object is achieved by a leak test machine for vehicle rim in accordance with the appended independent claim. The dependent claims describe preferred or advantageous embodiments of the leak test machine for vehicle rim.

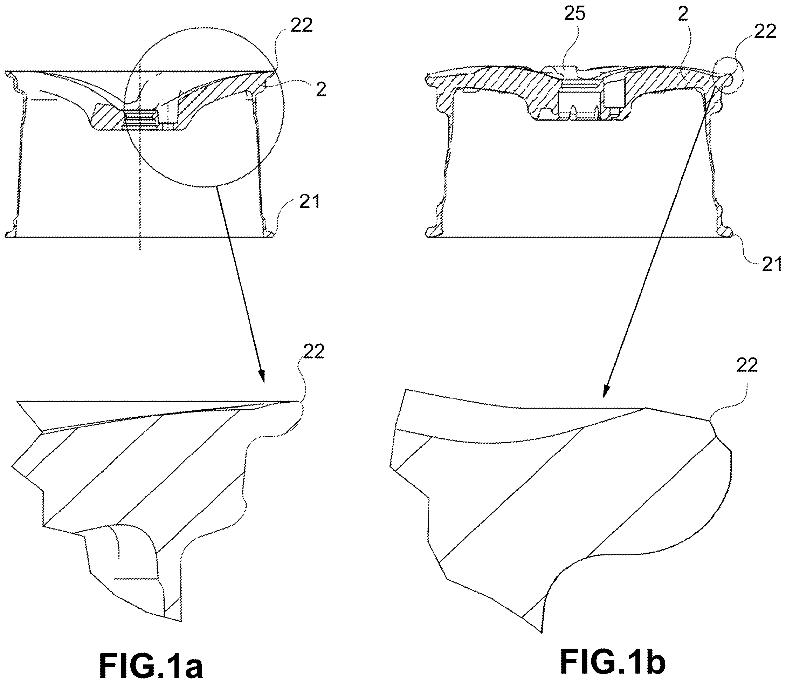

The features and advantages of the leak test machine for vehicle rim in accordance with the invention will however become apparent from the following description of preferred embodiments thereof, given by way of nonlimiting indication, with reference to the accompanying drawings, in which
Figure 1a shows an example of a type of vehicle rim in which, on an outer edge 22 of the rim, i.e., the rim edge which is exposed to the outside when the wheel is mounted on the vehicle, channels or discontinuities of the outer edge itself are obtained;
Figure 1b shows an example of a type of vehicle rim in which the outer spokes 25 of the rim reach above the outer edge 22 of the rim, thus modifying the linear geometry thereof;

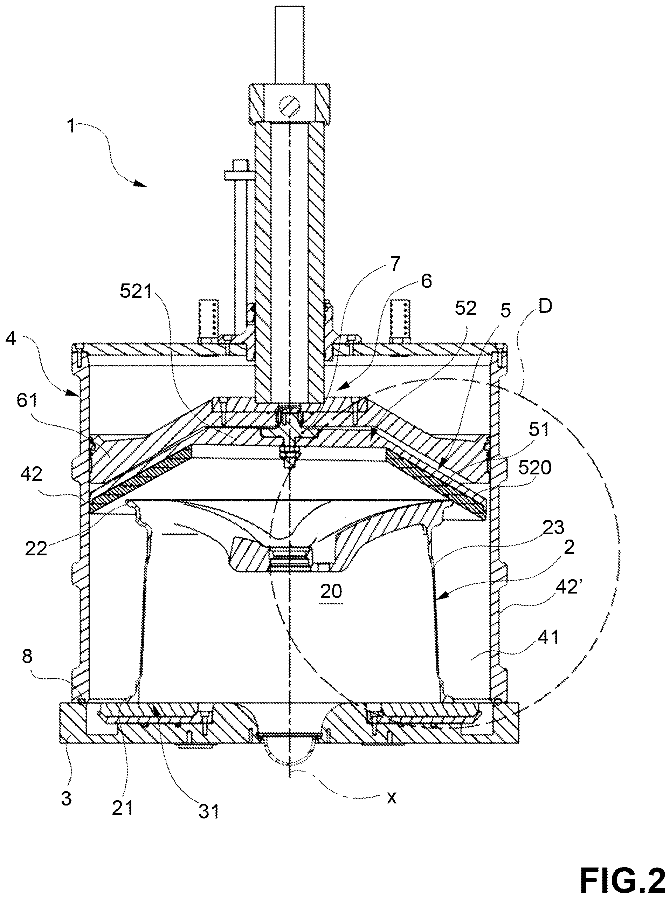

Figure 2 shows a planar sectional view of the leak test machine for vehicle rim according to an embodiment of the present invention, in a closed configuration;

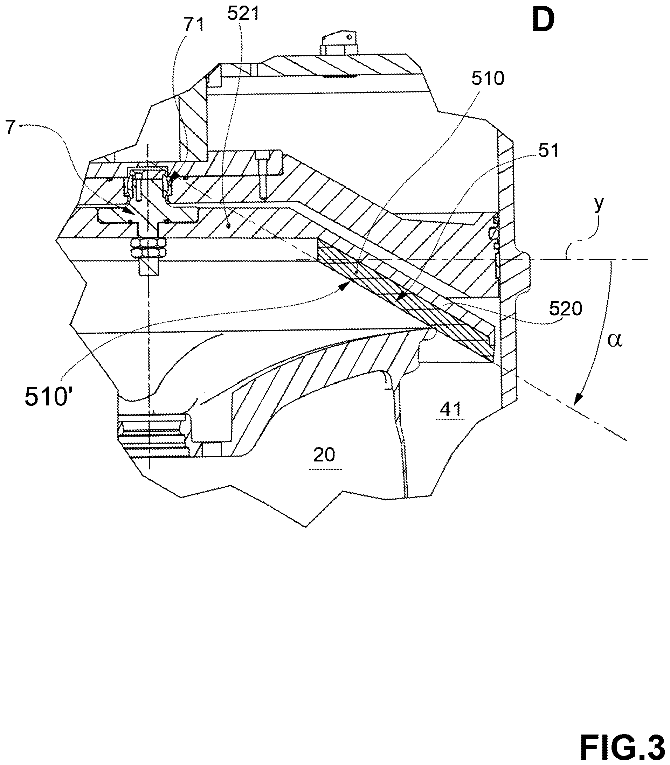

Figure 3 shows an enlarged detail of Figure 2.

With reference to the aforesaid Figures, reference numeral 1 generally indicates a leak test machine 1 for vehicle rim 2 (also known as wheel rim), for example a rim of a motorcycle, a car or large motor vehicle, such as a truck or the like.

The leak test machine 1 comprises a base 3, which supports a lower sealing element 31, for example, an annular gasket, suitable to receive a first edge 21 of the rim 2. Preferably, the first edge 21 of the rim 2 is the inner edge of the rim, i.e., the edge intended to face the vehicle body when the rim is mounted on the vehicle.

The first edge 21 and the outer edge 22 are therefore the edges of the rim on which the tire is fitted.

The base 3 is supported by a support plane, for example, by a floor, by means of a suitable support frame of the machine. Preferably, therefore, the machine comprises a support frame, which, on one side, rests on the floor and, on the other, is connected to the base 3.

The leak test machine 1 comprises a closing element 4, preferably in the shape of a cylindrical bell or parallelepiped, which is translatable along a translation direction X, preferably a vertical translation direction (i.e., perpendicular to the support plane of the machine), so as to take an open configuration in which the closing element 4 is not engaged with the base 3, and a closed configuration, in which the closing element 4 sealingly engages the base 3, so as to define a outer chamber 41 which completely surrounds the rim 2. In other words, in the open configuration, it is possible to insert the rim 2 on the first sealing element 31, for example, by an operator or a rim handling system; in the closed configuration, on the other hand, the closing element sealingly closes the outer chamber 41, around the rim 2.

The leak test machine 1 further comprises an upper sealing group 5 contained in the outer chamber 41 and translatable along the translation direction X to sealingly engage the rim 2 on an outer edge 22 of the rim 2 opposite to the first edge 21, so as to define an inner chamber 20 delimited by the upper sealing group 5, the lower sealing element 31 and the channel walls 23 of the rim 2. Therefore, when the upper sealing group sealingly engages the rim 2, the inner chamber 20 is defined, which results arranged inside the outer chamber 41, but sealed and not communicating with the outer chamber 41.

The leak test machine 1 further comprises a sealing group translation device 6, operatively connected to the upper sealing group 5 to move the sealing group along the translation direction X.

According to a preferred embodiment, the closing element 4 comprises a closing element sidewall 42, 42' suitable to sealingly engage the base 3. In this variant, the sealing group translation device 6 comprises a sealing group support element 61 slidably sealingly engaged with the closing element sidewall 42, 42'. Thereby, the outer chamber 41 is defined not only by the closing element 4, but, mostly, also by the sealing group translation device 6.

The upper sealing group 5 is supported in an articulated manner by the sealing group translation device 6, so as to allow at least one rotation of the upper sealing group 5 around an axis incident to the translation direction X. This allows to better adapt the upper sealing group 5 to the outer edge plane 22 of the rim.

According to a preferred embodiment, the upper sealing group 5 is supported in an articulated manner by the sealing group translation device 6 in an idle manner, i.e., in a passive and non-actuated manner.

Furthermore, preferably, the upper sealing group 5 is supported in a spaced manner by the sealing group translation device 6. This allows a movement space to be left between the sealing group translation device 6 and the upper sealing group 5.

According to an advantageous embodiment, the upper sealing group 5 is connected to the sealing group translation device 6 by means of a ball joint 71.

Preferably, the upper sealing group 5 comprises a support portion 52 and a sealing portion 51 being conical or truncated cone-shaped.

Preferably, in the conical or truncated cone shape, the sealing portion 51 comprises a sealing portion side wall 510 inclined with respect to a horizontal direction Y perpendicular to the translation direction X by an angle of inclination α at least equal to 20°. In accordance with advantageous embodiments, the angle of inclination α is chosen between 20° and 40°, including extremes, for example equal to about 40°. Such an angle of inclination α is measured as the acute angle between the horizontal direction Y and the inner surface 510' of the sealing portion sidewall 510 intended to come into contact with the outer edge 22 of the rim.

According to a preferred embodiment, the support portion 52 is truncated cone-shaped, comprising a sidewall of the support portion 520 inclined with respect to the horizontal direction Y, preferably with the same angles already indicated for the sealing portion 51.

Preferably, the sealing portion 51 is joined to the support portion 52 along the sidewall of the support portion 520.

Preferably, a junction element 7 connects the upper sealing group 5 to the sealing group translation device 6. In this variant, the support portion 52 comprises a support portion base wall 521 and the junction element 7 is fixed on one side integrally with the support portion 521 and, on the opposite side, comprises the ball joint 71 connected to the sealing group translation device 6.

Preferably, the leak test machine comprises a device for detecting a tracer gas, for example helium, inside the inner chamber 20, to detect any defects in the rim 2.

Preferably, the lower sealing element 31 and/or the sealing portion 51 are made of a polymeric material, preferably rubber or a silicone material.

To carry out the test on the rim 2 inserted in the leak test machine 1 according to the present invention, the closing element 4 is therefore opened, by translating it, by means of first translation means, along the translation direction X (not shown). This allows an access to insert the rim 2 resting on the lower sealing element 31 (for example, an annular gasket) along the first edge 21. The closing element 4 is then translated until it is sealingly engaged against the base 3. In this case, a further sealing element 8 (for example, a gasket) is preferably provided on the base 3 or on the closing element 4.

Subsequently, or in conjunction with the closure of the closing element 4, the sealing group translation device 6 is moved along the translation direction X until the upper sealing group 5 is sealingly engaged with the outer edge 22 of the rim. During this step, any inclination or misalignment of the rim with the upper sealing group 5 is compensated by the mobility of the upper sealing group 5 itself with respect to the sealing group translation device 6 and to the base 3 as well as with respect to the closing element 4.

At this point, the inner chamber 20 and the outer chamber 41 are created and not communicating with each other.

A pressurized gas mixture is then injected into the outer chamber 41. Such a gas mixture contains a tracer gas, for example helium.

After the outer chamber 41 has been pressurized, the pressure increase in the inner chamber 20 is detected, by means of a pressure detection device, or (or concomitantly) the tracer gas concentration over time in the inner chamber 20 is detected.

If the pressure of the inner chamber or the concentration of tracer gas exceeds a certain threshold in a certain time interval, the presence of a seeping, and, therefore, a possible defect of the rim, is thus detected.

Innovatively, the leak test machine according to the present invention allows to solve the drawbacks related to the background art. In particular, the leak test machine according to the present invention allows multiple types of rims to be tested in a quick and reliable manner, reducing the number of false rejects.

In fact, by virtue of the presence of the rotatable, or, even better, pivoting or floating upper sealing group 6, it is possible to compensate for any misalignments between the axis of the rim and the axis of the truncated cone of the upper sealing group 5. By virtue of this, a possible non-uniformity in the application of the load on the rim is avoided, which happens, instead, in machines of the background art in which the upper sealing group is fixed.

Furthermore, in a synergic way with the presence of the rotatable (or, even better, pivoting or floating) upper sealing group 5, it is possible to obtain the sealing portion 51 with a sealing portion side wall 510 inclined, with respect to the horizontal direction Y, by a rather wide angle of inclination α (at least equal to 20°, or even wider, for example equal to 40°). The increased angle of inclination allows to test rims with very protruding hubs and discontinuous edges, since it allows the sealing portion 510 to work on an edge periphery which is not interrupted by spokes nor discontinuities. Furthermore, the increased angle of inclination, made possible by the presence of a rotatable or floating upper sealing group 5, also allows to reduce the load on the sealing portion, increasing the duration thereof over time. Furthermore, being capable of reducing the load on the rim, it is possible to use softer materials for making the sealing portion 51 and/or the sealing element 31, which allow to better adapt to the irregularities of the rim edges. Preferably, the lower sealing element 31 and/or the sealing portion 51 are made of a polymeric material, preferably rubber or a silicone material, with shore hardness A between 45 and 85, and even more preferably between 50 and 80, for example, about 50.

Those skilled in the art, in order to meet specific needs, may modify the embodiments of the leak test machine for vehicle rim within the scope of the invention as defined by the appended claims.

## Claims

1. Leak test machine (1) for vehicle rim (2) comprising:
- a base (3), which supports a lower sealing element (31) suitable for receiving a first edge (21) of the rim (2);
- a closing element (4), translatable along a translation direction (X) to assume an open configuration in which the closing element (4) is not engaged with the base (3) and allows the insertion of the rim (2) on the first sealing element (31) and a closed configuration, in which the closing element (4) engages sealingly with the base (3) so as to define an outer chamber (41) which completely surrounds the rim (2);
- an upper sealing group (5), contained in the outer chamber (41) and translatable along the translation direction (X) to sealingly engage the rim (2) on an outer edge (22) of the rim (2) opposite to the first edge (21), so as to define an inner chamber (20) delimited by the upper sealing group (5), the lower sealing element (31) and the channel walls (23) of the rim;
- a sealing group translation device (6), operatively connected with the upper sealing group (5) to move the upper sealing group (5) along the translation direction (X) ;
wherein said leak test machine (1) is **characterized in that** the upper sealing group (5) is supported in an articulated manner by the sealing group translation device (6), so as to allow at least a rotation of the upper sealing group (5) around an axis incident to the direction of translation (X).

2. Leak test machine (1) according to claim 1, wherein the upper sealing group (5) is supported in an articulated manner by the sealing group translation device (6) in an idle manner.

3. Leak test machine (1) according to claim 1 or 2, wherein the upper sealing group (5) is supported in a spaced manner by the sealing group translation device (6) .

4. Leak test machine (1) according to any one of the preceding claims, wherein the upper sealing group (5) is connected to the sealing group translation device (6) by means of a ball joint (71).

5. Leak test machine (1) according to any one of the preceding claims, wherein the upper seal group (5) comprises a support portion (52) and a sealing portion (51), said sealing portion (51) being conical or truncated cone in shape.

6. Leak test machine (1) according to claim 5, wherein the sealing portion comprises a sealing portion side wall (510) inclined with respect to a horizontal direction (Y) perpendicular to the translation direction (X) by an angle of inclination (α) at least equal to 20°, measured as an acute angle between the horizontal direction (Y) and the inner surface (510') of the sealing portion side wall (510) intended to come into contact with the outer edge (22) of the rim.

7. Leak test machine (1) according to claim 5 or 6, wherein the support portion (52) has a frusto-conical shape, comprising a support portion side wall (520) inclined with respect to the direction of translation (X), and wherein the sealing portion (51) is joined to the support portion (52) along said support portion side wall (520).

8. Leak test machine (1) according to claims 2, 3 and 7, wherein the machine comprises a junction element (7) which connects the upper sealing group (5) to the sealing group translation device (6),
and wherein the support portion (52) comprises a support portion base wall (521),
and wherein said junction element (7) is fixed on one side integrally with a support portion (521) and on an opposite side comprises the ball joint (71) connected with the sealing group translation device (6).

9. Leak test machine (1) according to any one of the preceding claims, wherein the closing element (4) comprises a closing element side wall (42, 42') suitable for sealingly engaging with the base (3),
and wherein the sealing group translation device (6) comprises a sealing group support element (61) slidably sealingly engaged with the closing element side wall (42, 42').

10. Leak test machine (1) according to any one of the preceding claims, comprising a device for detecting a tracer gas, for example helium, inside the inner chamber (20) .

## Patentansprüche

1. Dichtheitsprüf- bzw. Lecktestmaschine (1) für Fahrzeugfelge (2), umfassend:
- eine Basis (3), die ein unteres Dichtungselement (31) stützt bzw. trägt, das zum Aufnehmen einer ersten Kante bzw. eines ersten Rands (21) der Felge (2) geeignet ist;
- ein Schließelement (4), das entlang einer Translations- bzw. Verschiebungsrichtung (X) verschiebbar ist, um eine offene Konfiguration, in der das Schließelement (4) nicht mit der Basis (3) in Eingriff ist und das Einsetzen der Felge (2) an dem ersten Dichtungselement (31) erlaubt, und eine geschlossene Konfiguration einzunehmen, in der das Schließelement (4) dichtend mit der Basis (3) in Eingriff ist, um eine äußere Kammer (41) zu definieren, die die Felge (2) vollständig umgibt;
- eine obere Dichtungsgruppe (5), die in der äußeren Kammer (41) enthalten und entlang der Verschiebungsrichtung (X) verschiebbar ist, um dichtend in die Felge (2) an einer Außenkante (22) der Felge (2) gegenüberüberliegend bzw. entgegengesetzt zu der ersten Kante (21) einzugreifen, um eine innere Kammer (20) zu definieren, die durch die obere Dichtungsgruppe (5), das untere Dichtungselement (31) und die Kanalwände (23) der Felge begrenzt ist;
- eine Dichtungsgruppe-Translations- bzw. -Verschiebungsvorrichtung (6), die operativ mit der oberen Dichtungsgruppe (5) verbunden ist, um die obere Dichtungsgruppe (5) entlang der Verschiebungsrichtung (X) zu bewegen;
wobei die Dichtheitsprüfmaschine (1) **dadurch gekennzeichnet ist, dass** die obere Dichtungsgruppe (5) gelenkig durch die Dichtungsgruppe-Verschiebungsvorrichtung (6) gelagert ist, um zumindest eine Drehung der oberen Dichtungsgruppe (5) um eine Achse zu erlauben, die auf die Verschiebungsrichtung (X) einfällt bzw. mit dieser zusammenfällt.

2. Dichtheitsprüfmaschine (1) nach Anspruch 1, wobei die obere Dichtungsgruppe (5) gelenkig durch die Dichtungsgruppe-Verschiebungsvorrichtung (6) im Leerlauf gelagert ist.

3. Dichtheitsprüfmaschine (1) nach Anspruch 1 oder 2, wobei die obere Dichtungsgruppe (5) auf beabstandete Weise durch die Dichtungsgruppe-Verschiebungsvorrichtung (6) gelagert ist.

4. Dichtheitsprüfmaschine (1) nach einem der vorhergehenden Ansprüche, wobei die obere Dichtungsgruppe (5) mittels eines Kugelgelenks (71) mit der Dichtungsgruppe-Verschiebungsvorrichtung (6) verbunden ist.

5. Dichtheitsprüfmaschine (1) nach einem der vorhergehenden Ansprüche, wobei die obere Dichtungsgruppe (5) einen Stütz- bzw. Trägerabschnitt (52) und einen Dichtungsabschnitt (51) umfasst, wobei der Dichtungsabschnitt (51) von der Form her konisch oder kegelstumpfförmig ist.

6. Dichtheitsprüfmaschine (1) nach Anspruch 5, wobei der Dichtungsabschnitt eine Dichtungsabschnittsseitenwand (510) umfasst, die in Bezug auf eine horizontale Richtung (Y) senkrecht zu der Verschiebungsrichtung (X) um einen Neigungswinkel (α) von zumindest gleich 20°, gemessen als ein spitzer Winkel zwischen der horizontalen Richtung (Y) und der Innenfläche bzw. -oberfläche (510') der Dichtungsabschnittsseitenwand (510) geneigt ist, die mit der Außenkante (22) der Felge in Kontakt kommen soll.

7. Dichtheitsprüfmaschine (1) nach Anspruch 5 oder 6, wobei der Stützabschnitt (52) eine kegelstumpfförmige Form aufweist, umfassend eine Stütz-bzw. Trägerabschnittsseitenwand (520), die in Bezug auf die Verschiebungsrichtung (X) geneigt ist, und wobei der Dichtungsabschnitt (51) entlang der Stützabschnittsseitenwand (520) mit dem Stützabschnitt (52) verbunden ist.

8. Dichtheitsprüfmaschine (1) nach den Ansprüchen 2, 3 und 7, wobei die Maschine ein Kreuzungs- bzw. Verbindungselement (7) umfasst, das die obere Dichtungsgruppe (5) mit der Dichtungsgruppe-Verschiebungsvorrichtung (6) verbindet,
und wobei der Stützabschnitt (52) eine Stütz- bzw. Trägerabschnittsbasiswand (521) umfasst,
und wobei das Verbindungselement (7) auf einer Seite integral mit einem Stützabschnitt (521) befestigt ist und auf einer gegenüberliegenden bzw. entgegengesetzten Seite das Kugelgelenk (71) umfasst, das mit der Dichtungsgruppe-Verschiebungsvorrichtung (6) verbunden ist.

9. Dichtheitsprüfmaschine (1) nach einem der vorhergehenden Ansprüche, wobei das Schließelement (4) eine Schließelementseitenwand (42, 42') umfasst, die zum dichtenden Eingriff mit der Basis (3) geeignet ist,
und wobei die Dichtungsgruppe-Verschiebungsvorrichtung (6) ein Dichtungsgruppe-Stütz- bzw. -Trägerelement (61) umfasst, das verschiebbar und dichtend mit der Schließelementseitenwand (42, 42') in Eingriff ist.

10. Dichtheitsprüfmaschine (1) nach einem der vorhergehenden Ansprüche, umfassend eine Vorrichtung zum Detektieren eines Tracer-Gases bzw. Prüfgases, beispielsweise Helium, innerhalb der inneren Kammer (20).

## Revendications

1. Machine de test de fuite (1) pour jante de véhicule (2) comprenant :
- une base (3), qui supporte un élément d'étanchéité inférieur (31) adapté pour recevoir un premier bord (21) de la jante (2) ;
- un élément de fermeture (4), pouvant être translaté le long d'une direction de translation (X) pour adopter une configuration ouverte dans laquelle l'élément de fermeture (4) n'est pas en prise avec la base (3) et permet l'insertion de la jante (2) sur le premier élément d'étanchéité (31) et une configuration fermée, dans laquelle l'élément de fermeture (4) vient en prise de manière étanche avec la base (3) de manière à définir une chambre extérieure (41) qui entoure complètement la jante (2) ;
- un groupe d'étanchéité supérieur (5), contenu dans la chambre extérieure (41) et pouvant être translaté le long de la direction de translation (X) pour mettre en prise de manière étanche la jante (2) sur un bord extérieur (22) de la jante (2) opposé au premier bord (21), de manière à définir une chambre intérieure (20) délimitée par le groupe d'étanchéité supérieur (5), l'élément d'étanchéité inférieur (31) et les parois de canal (23) de la jante ;
- un dispositif de translation de groupe d'étanchéité (6), relié fonctionnellement au groupe d'étanchéité supérieur (5) pour déplacer le groupe d'étanchéité supérieur (5) le long de la direction de translation (X) ;
dans laquelle ladite machine de test de fuite (1) est **caractérisée en ce que** le groupe d'étanchéité supérieur (5) est supporté d'une manière articulée par le dispositif de translation de groupe d'étanchéité (6), de manière à permettre au moins une rotation du groupe d'étanchéité supérieur (5) autour d'un axe incident à la direction de translation (X).

2. Machine de test de fuite (1) selon la revendication 1, dans laquelle le groupe d'étanchéité supérieur (5) est supporté d'une manière articulée par le dispositif de translation de groupe d'étanchéité (6) d'une manière inactive.

3. Machine de test de fuite (1) selon la revendication 1 ou 2, dans laquelle le groupe d'étanchéité supérieur (5) est supporté d'une manière espacée par le dispositif de translation de groupe d'étanchéité (6).

4. Machine de test de fuite (1) selon l'une quelconque des revendications précédentes, dans laquelle le groupe d'étanchéité supérieur (5) est relié au dispositif de translation de groupe d'étanchéité (6) au moyen d'une rotule (71).

5. Machine de test de fuite (1) selon l'une quelconque des revendications précédentes, dans laquelle le groupe d'étanchéité supérieur (5) comprend une partie de support (52) et une partie d'étanchéité (51), ladite partie d'étanchéité (51) ayant une forme conique ou de cône tronqué.

6. Machine de test de fuite (1) selon la revendication 5, dans laquelle la partie d'étanchéité comprend une paroi latérale de partie d'étanchéité (510) inclinée par rapport à une direction horizontale (Y) perpendiculaire à la direction de translation (X) d'un angle d'inclinaison (α) au moins égal à 20°, mesuré comme un angle aigu entre la direction horizontale (Y) et la surface intérieure (510') de la paroi latérale de partie d'étanchéité (510) destinée à entrer en contact avec le bord extérieur (22) de la jante.

7. Machine de test de fuite (1) selon la revendication 5 ou 6, dans laquelle la partie de support (52) a une forme tronconique, comprenant une paroi latérale de partie de support (520) inclinée par rapport à la direction de translation (X), et dans laquelle la partie d'étanchéité (51) est assemblée à la partie de support (52) le long de ladite paroi latérale de partie de support (520).

8. Machine de test de fuite (1) selon les revendications 2, 3 et 7, dans laquelle la machine comprend un élément de jonction (7) qui relie le groupe d'étanchéité supérieur (5) au dispositif de translation de groupe d'étanchéité (6),
et dans laquelle la partie de support (52) comprend une paroi de base de partie de support (521),
et dans laquelle ledit élément de jonction (7) est fixé sur un côté d'un seul tenant avec une partie de support (521) et comprend sur un côté opposé la rotule (71) reliée au dispositif de translation de groupe d'étanchéité (6).

9. Machine de test de fuite (1) selon l'une quelconque des revendications précédentes, dans laquelle l'élément de fermeture (4) comprend une paroi latérale d'élément de fermeture (42, 42') adaptée pour venir en prise de manière étanche avec la base (3),
et dans laquelle le dispositif de translation de groupe d'étanchéité (6) comprend un élément de support de groupe d'étanchéité (61) en prise de manière coulissante et étanche avec la paroi latérale d'élément de fermeture (42, 42').

10. Machine de test de fuite (1) selon l'une quelconque des revendications précédentes, comprenant un dispositif de détection d'un gaz traceur, par exemple de l'hélium, à l'intérieur de la chambre intérieure (20).
